# EUROPÄISCHE PATENTSCHRIFT

(11) **EP 3 144 571 B1**
(45) Veröffentlichungstag und Bekanntmachung des Hinweises auf die Patenterteilung: **12.09.2018**
(21) Anmeldenummer: 16188968.8
(22) Anmeldetag: 15.09.2016
(51) Int. Cl.: F16K 17/16, F16K 17/40, B65D 90/36

(54) **BERSTSCHEIBE MIT WÄRMEISOLIERUNG**
RUPTURE DISC WITH THERMAL INSULATION
DISQUE DE RUPTURE A ISOLATION THERMIQUE

(30) Priorität: 16.09.2015 DE 102015115621
(43) Veröffentlichungstag der Anmeldung: 22.03.2017
(73) Patentinhaber: IEP Technologies GmbH, 40878 Ratingen (DE)
(72) Erfinder: Bunse, Martin, 59929 Brilon (DE)
(74) Vertreter: Patentanwälte Pinter & Weiss OG

(56) Entgegenhaltungen:
- DE-A1- 2 458 648
- DE-A1- 4 405 471
- DE-A1-102004 023 783
- US-A- 3 972 442
- US-A1- 2007 234 655

## Beschreibung

### Gebiet der Technik

Die Erfindung betrifft eine Berstscheibe mit einem Flanschbereich zum Befestigen an einem Rand einer Öffnung einer Wand einer lufttechnischen Anlage, wobei ein an den Flanschbereich der Berstscheibe entlang einer Sollbruchlinie angrenzender Zentralbereich der Berstscheibe mit einer berstscheibenseitigen Wärmeisolierung versehen ist, die sich zumindest nicht über Befestigungselemente des Flanschbereichs erstreckt, so dass sich eine vom Flanschbereich und der berstseitigen Wärmeisolierung begrenzte Nische ausbildet.

Die Erfindung betrifft darüber hinaus eine Berstscheibenanordnung, bei der die vorgenannte Berstscheibe am Rand einer Öffnung einer Wand einer lufttechnischen Anlage befestigt ist und die Öffnung verschließt, wobei die Wand mit einer anlagenseitigen Wärmeisolierung versehen ist, die sich bis an den Flanschbereich der Berstscheibe erstreckt, wobei sich zwischen zumindest berstscheibenseitiger Wärmeisolierung und anlagenseitiger Wärmeisolierung ein der Nische entsprechender Spalt ausbildet.

### Stand der Technik

Berstscheiben werden an lufttechnischen Anlagen, insbesondere in der holzverarbeitenden Industrie verwendet, wobei durch die lufttechnische Anlage ein entzündbarer Staub transportiert wird. Bei einer auf eine Entzündung folgenden Explosion kann sich zum Zwecke des Druckabbaus ein Zentralbereich der Berstscheibe von dem ihn umgebenden Flanschbereich lösen und um eine Angel, ähnlich einem Scharnier, in eine Öffnungsstellung schwenken. Das Lösen des Zentralbereichs vom Flanschbereich erfolgt dabei entlang einer Sollbruchlinie.

Berstscheiben dieser Art sind bekannt aus den DE 195 42 092 A1, DE 199 01 160 A1, DE 690 007 781 T1.

Es ist ferner bekannt, auf der nach außen weisenden Breitseitenfläche der Berstscheibe, nämlich auf dem Zentralbereich eine Wärmeisolierung, beispielsweise in Form einer Wärmeisolationskassette anzubringen. Die Kassette kann eine Hülle aus Metall aufweisen. Innerhalb des von der Hülle gebildeten Hohlraums befindet sich Mineralwolle oder ein anderer geeigneter Dämmstoff. Die Kassette kann am Zentralbereich befestigt werden. Es ist aber auch möglich, die Kassette im Angelbereich am Flanschbereich zu befestigen, so dass die Kassette ein ordnungsgemäßes Öffnen des Zentralbereichs im Explosionsfall nicht beeinträchtigt. Die lufttechnische Anlage besitzt eine Wandung, die mit einer anlagenseitigen Wärmeisolierung versehen ist. Auch diese Wärmeisolierung kann aus einer Mineralwolle oder einem anderen geeigneten Dämmstoff bestehen. Der Dämmstoff ist nach außen hin mit einer Metallschicht beispielsweise mit Blechen abgedeckt. Um ein Auswechseln einer Berstscheibe zu ermöglichen, darf sich die anlagenseitige Wärmedämmung nicht bis über den Flanschbereich erstrecken. Sie erstreckt sich somit nur bis an den Flanschbereich. Da sich auch die berstscheibenseitige Wärmeisolierung nicht über den Flanschbereich erstrecken darf, um einen Zugang zu den Befestigungsmitteln zu gewährleisten, mit denen der Flanschbereich am Rand der Öffnung der Wand der lufttechnischen Anlage befestigt ist, bildet sich im Flanschbereich eine Kältebrücke aus.

DE 10 2004 023 783 A1 offenbart eine Überdrucksicherung für ein druckbeaufschlagbares Gehäuse mit einer Berstplatte. Die mit einer Wölbung versehene Berstplatte ist in einen Rahmen eingefasst, der als Ringflansch ausgebildet sein kann, und der die äußeren Oberflächen der Berstplatte zu beiden Seiten überragt. Der überstehende Teil des Ringflansches kann an einer oder beiden Seiten über der Oberfläche der Berstplatte mit einer Füllmasse ausgefüllt sein, sodass eine mit dem Rahmen bündig abschließende Außenfläche gebildet wird, die frei von Vertiefungen ist und die Berstplatte schützend abdeckt.

US 2007/0234655 A1 offenbart ein rechteckiges Berstpaneel mit einem Innenbereich und einem diesen Innenbereich umgebenden Flanschbereich, wobei Innenbereich und Flanschbereich an drei Seiten durch eine Sollbruchlinie getrennt sind. Das Berstpaneel besteht aus einem Glasfaser-Verbundmaterial mit Glasfaserverstärkungen, die in einen Harzkörper eingebettet sind. Die Sollbruchlinie ist als Rille ausgebildet, die mit einem Füllmaterial, beispielsweise einem synthetischen Harz, ausgefüllt sein kann.

DE 24 58 648 A1 offenbart eine Sicherheitseinrichtung nach Art einer Explosionssicherung mit einer Berstscheibe. Die metallene Berstscheibe ist in einen Rahmen eingeklemmt und die äußere Oberfläche ist gegen Korrosion zufolge Witterungseinflüssen oder dergleichen mittels einer Isolierstofftafel geschützt, die von einer äußeren Abdeckplatte gehalten ist. Die Isolierstofftafel bedeckt lediglich den Zentralbereich der Berstscheibe und überdeckt die Befestigungselemente des Rahmens nicht.

### Zusammenfassung der Erfindung

Der Erfindung liegt die Aufgabe zugrunde, eine Gattungsgemäße Berstscheibe beziehungsweise Berstscheibenanordnung gebrauchsvorteilhaft weiterzubilden.

Gelöst wird die Aufgabe durch die in den Ansprüchen angegebene Erfindung, wobei die Unteransprüche nicht nur vorteilhafte Weiterbildungen, sondern grundsätzlich auch eigenständige Lösungen der Aufgabe darstellen.

Zunächst und im Wesentlichen ist eine flanschseitige Isolierung vorgesehen, die nach der Befestigung des Flanschbereichs am Rande der Öffnung in einer die Nische ausfüllenden Weise am Flanschbereich anbringbar ist. Dies kann dadurch erfolgen, dass lose Dämmwolle in den Spalt zwischen der anlagenseitigen Wärmeisolierung und der berstscheibenseitigen Wärmeisolierung eingebracht wird. Im Anschluss daran wird dieser Spalt beziehungsweise die Nische zwischen Seitenwandung der berstscheibenseitigen Wärmeisolierung und Flanschbereich durch den Rand einer Abdeckung überdeckt, so dass die flanschseitige Wärmeisolierung regengesichert ist. Bevorzugt erfolgt die Montage des Flanschbereichs in einer horizontalen Weise. Die erfindungsgemäße Berstscheibe kann aber nicht nur an horizontalen Wänden einer Anlage, sondern auch an vertikalen Wänden einer Anlage befestigt werden. Die Abdeckung ist an der Berstscheibe, insbesondere am Zentralbereich, bevorzugt aber unmittelbar an der berstscheibenseitigen Wärmeisolierung befestigt. Die flanschseitige Wärmeisolierung besitzt eine ausreichende Kompressionsfähigkeit, um ein ordnungsgemäßes Funktionieren der Berstscheibe zu gewährleisten. Die Abdeckung ist bevorzugt aus einem dünnen Blech ausgebildet, das sich bei einem Öffnen der Berstscheibe verformen kann. Mit dem Rand der Abdeckung wird der zwischen anlagenseitiger Wärmeisolierung und berstscheibenseitigen Wärmeisolierung ausgebildete Spalt verschlossen. Dieser Spalt ist mit der flanschseitigen Wärmeisolierung ausgefüllt, so dass die Kältebrücke wirksam vermindert ist. In einer bevorzugten Ausgestaltung wird die berstscheibenseitige Wärmeisolierung von einer Kassette ausgebildet, die außenseitig auf dem Zentralbereich befestigt ist, wozu die Kassette entweder mit dem Zentralbereich oder mit einem Angelbereich des Flansches befestigt ist. Die Kassette kann aber auch sowohl am angelseitigen Flanschbereich als auch am Zentralbereich der Berstscheibe befestigt sein. Die Kassette besitzt bevorzugt eine metallische Wand, die sich mit Abstand parallel zum Zentralbereich erstreckt. Der Flanschbereich definiert eine Montageebene. In einer Parallelebene zu dieser Montageebene erstreckt sich die metallische Wand der Kassette. Die anlagenseitige Wärmeisolierung erfolgt bis an einen Anstoß, der sich entlang des Grundrisses des Flansches erstreckt. Dieser Anstoß wird von einem Rahmenblech ausgebildet. Das Rahmenblech umgibt eine Fläche, in welcher der gesamte Flanschbereich Aufnahme findet. Der Flanschbereich kann Befestigungsöffnungen aufweisen, durch die Befestigungsschrauben hindurchgreifen, mit denen der Flanschbereich am Rand der Öffnung der Wand befestigt ist. Diese Befestigungsschrauben sind von außen zugänglich. Hierzu dient der Spalt zwischen Seitenwand der berstscheibenseitigen Wärmeisolierung, die insbesondere von einem metallischen Bereich der Kassette ausgebildet ist, und dem Rahmenblech. Erfindungsgemäß wird in diesen Spalt ein loses Dämmmaterial, beispielsweise eine lose Mineralwolle, eingebracht. Der Spalt kann sich um die berstscheibenseitige Wärmeisolierung, also insbesondere die Kassette herum erstrecken. Dieser, in der Draufsicht rechteckige Spalt, wird mit der losen Isolierwolle aufgefüllt. Die berstscheibenseitige Wärmeisolierung und insbesondere die Isolierkassette besitzt Befestigungsmittel, mit denen die Abdeckung befestigt werden kann. Es sind insbesondere Einzugsmuttern vorgesehen, in die Befestigungsschrauben eingedreht werden können, mit denen die Abdeckung an der Kassette befestigt wird. Die Abdeckung kann eine Metallplatte sein, die sich über den gesamten Zentralbereich und den gesamten Flanschbereich erstreckt. Der Rand der Abdeckung umgibt somit in der Draufsicht den äußeren Rand des Flanschbereichs, so dass die Berstscheibe vollständig von der Abdeckung überfangen ist. Es ist aber auch möglich, dass sich die Abdeckung lediglich über den Spalt beziehungsweise die Nische erstreckt. Die bevorzugt von einem Metallblech ausgebildete Abdeckung bildet somit einen Randabschnitt aus, der sich in etwa in einer Parallelebene zur Montageebene erstreckt. Dieser Randbereich liegt somit bezogen auf die Nische dem Flanschbereich gegenüber. Er erstreckt sich in einer vom Flanschbereich wegweisenden Richtung über die Nische. In einer bevorzugten Weiterbildung besitzt der Randbereich der Abdeckung einen in Richtung auf den Flansch weisenden Überstand. Der Überstand kann sich über den gesamten Umfangsrand der Abdeckung erstrecken und bildet einen Regenschutzkragen aus. Dieser Regenschutzkragen übergreift einen Steg, der vom Rahmenblech ausgebildet ist und der in von der Wand der lufttechnischen Anlage wegeisenden Richtung über die Abdeckung der anlagenseitigen Wärmeisolierung hinausragt. Der Überstand kann etwa 10 mm betragen. Hierdurch ergibt sich eine Regensicherung des mit der flanschseitigen Wärmeisolierung ausgefüllten Spaltes.

### Kurze Beschreibung der Zeichnungen

Im Folgenden wird die Erfindung anhand eines Ausführungsbeispieles näher erläutert. Es zeigen:
- Fig. 1: die Draufsicht auf die Wandung einer lufttechnischen Anlage mit einer eine Öffnung 21 der Wand 20 verschließenden Berstscheibe 1 und einem sich zwischen einer berstscheibenseitigen Wärmeisolierung 4 und einer anlagenseitigen Wärmeisolierung 22 ausbildenden Spalt 16, in dem sich der Flanschbereich 2 der Berstscheibe 1 erstreckt,
- Fig. 2: den Schnitt gemäß der Linie II-II in Figur 1,
- Fig. 3: eine Darstellung gemäß Figur 1, jedoch nach Ausfüllen des Spaltes 16 mit einer flanschseitigen Wärmeisolierung 15 und Abdecken des Spaltes 16 mit einer Abdeckung 12, und
- Fig. 4: einen Schnitt gemäß der Linie IV-IV in Figur 3.

### Beschreibung der Ausführungsformen

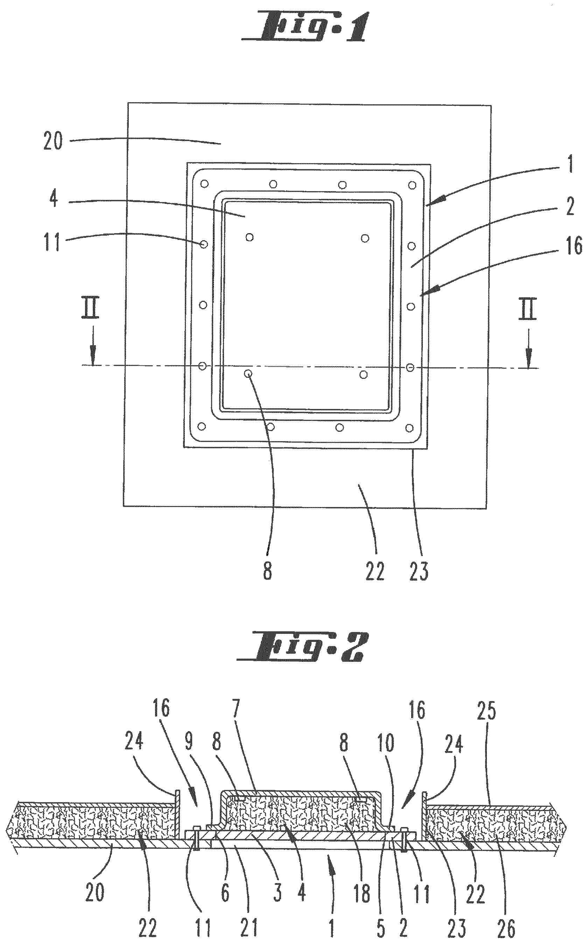

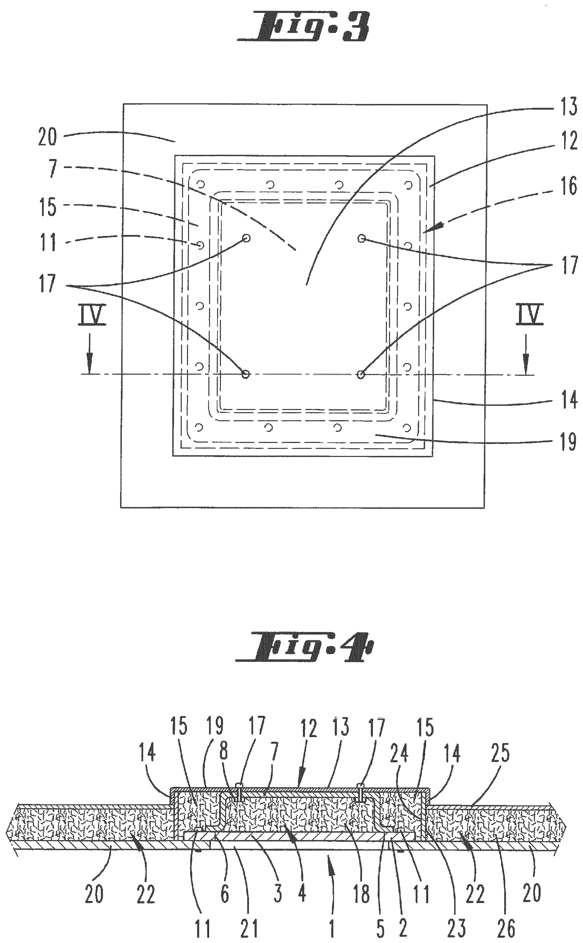

Die Figuren 1 und 3 zeigen in einer Draufsicht einer horizontalen Wand 20 einer lufttechnischen Anlage, beispielsweise eines Staubtransportschachtes, durch welchen mittels eines Luftstromes ein explosiver Staub beispielsweise bei der Holzverarbeitung transportiert wird. Die Wand 20 des Schachtes besitzt eine Öffnung 21, die einen die Öffnung umgebenden Randbereich besitzt. Auf diesen die Öffnung 21 umgebenden Randbereich ist ein Flanschbereich 2 einer Berstscheibe 1 aufgesetzt. Der Flanschbereich 2 liegt dabei in einer Montageebene und wird mittels durch Befestigungsöffnungen 11 greifenden Befestigungsverschraubungen an der Wand 20 befestigt. Der Flanschbereich 2 weist eine Vielzahl von Befestigungsöffnungen auf, durch welche die Befestigungsschrauben hindurchgesteckt werden können. Es ist alternativ auch eine Vernietung möglich.

Der Flanschbereich 2 umgibt einen Zentralbereich 3. Der Zentralbereich 3 grenzt entlang einer Sollbruchlinie 5 beziehungsweise einer Angel 6 an den Flanschbereich 2 an.

Die schachtaußenseitige Breitseitenfläche des Zentralbereichs 3 ist mit einer berstscheibenseitigen Wärmeisolierung 4 versehen. Es handelt sich dabei um eine Kassette, die von einem wannenförmigen Metallblechteil 7 ausgebildet ist. Das Blechteil 7 besitzt einen Befestigungsrand 9, mit dem die Kassette 4 im Bereich der Angel 6 sowohl mit dem Zentralbereich 3 als auch mit dem Flanschbereich 2 befestigt ist. Ein Abdeckrand 10 erstreckt sich im Bereich der Sollbruchlinie 5 und kann die Sollbruchlinie 5 überdecken.

Die metallische Wand 7 erstreckt sich in einer Parallelebene zur Montagebene. Von der Wand 7 abragende Schmalseitenwände der Kassette 4 liegen einem Rahmenblech 23 gegenüber, das den Abschluss der anlagenseitigen Wärmeisolierung 22 ausbildet, die auch eine Dämmmasse 26 ausbildet, die zwischen Wand 20 und einer Abdeckung 25 angeordnet ist.

Der Hohlraum zwischen der Wandung 7 der Kassette 4 und dem Zentralbereich 3 ist ebenfalls von einer Dämmmasse 18 ausgefüllt. Die Dämmmassen 18, 26 können aus einer Mineralwolle bestehen.

Im Bereich der Wand 7 besitzt die berstscheibenseitige Wärmeisolierung 4 Befestigungselemente, insbesondere in Form von Einziehmuttern 8. In die Innengewinde der Muttern 8 können die Außengewinde von Befestigungsschrauben 17 eingedreht werden, mit denen eine von einem Metallblech, beispielsweise einem Aluminiumblech gebildete Abdeckung 12 an der Wärmeisolierung 4, insbesondere der Kassette befestigt werden kann.

Die Abdeckung besitzt einen Randabschnitt 19, der sich über einen Spalt beziehungsweise eine Nische 16 erstrecken kann, die sich zwischen der Schmalseite der Wärmeisolierung 4 der Berstscheibe und der Wärmeisolierung 22 der Anlage erstreckt. Diese Nische 16, deren Weite im Wesentlichen durch die Breite des Flanschbereiches 2 bestimmt wird, ist erforderlich, um ein nachträgliches Auswechseln einer Berstscheibe 1 zu ermöglichen. Der Boden der Nische 16 beziehungsweise des Spaltes zwischen den Wärmeisolierungen 4, 22 wird vom Flanschbereich 2 gebildet.

Die Nische 16 wird durch den Randbereich der Abdeckung 12 verschlossen, wobei ein sich über den gesamten Rand der Abdeckung 12 erstreckender Kragen 14 über einen Steg 24 legt, mit dem das Rahmenblech 23 die Abdeckung 25 der anlagenseitigen Wärmeisolierung überragt. Der Zentralbereich 13 der Abdeckung 12 dient zur Befestigung an der Berstscheibe 1.

Die Montage der erfindungsgemäßen Berstscheibe 1 erfolgt in drei Schritten:

In einem ersten Schritt wird der Flanschbereich 2 der Berstscheibe 1 am Rand der Öffnung 21 befestigt, so dass die Berstscheibe 1 die Öffnung 21 vollständig verschließt. Dann ist der in den Figuren 1 und 2 dargestellte Zustand erreicht, bei dem die berstscheibenseitige Wärmeisolierung 4 von einer ringsumlaufenden Nische 16 spaltartig umgeben ist, die einseitig von dem Schmalrand der berstscheibenseitigen Wärmeisolierung 4 und anderseitig von dem Schmalrand der anlagenseitigen Wärmeisolierung 22 begrenzt ist, einen Boden ausbildet, der vom Flanschbereich 2 ausgebildet ist und nach oben hin offen ist.

In einem zweiten Montageschritt wird in diese nach oben offene Nische 16 eine lose Dämmwolle eingelegt, so dass sich eine flanschseitige Wärmeisolierung 15 ausbildet.

In einem darauf folgenden dritten Montageschritt wird der Spalt 16 verschlossen. Hierzu wird die Abdeckung 12 mit der Berstscheibe 1 verbunden. Dies erfolgt durch Befestigungsschrauben 17, die in die Muttern 8 eingedreht werden. Dabei wird der anlagenseitige Steg 24, der von einem Überstand des Rahmenblechs 23 ausgebildet wird, von den von einer Abkantung ausgebildeten Kragen 14 überfangen, so dass eine Regensicherung gewährleistet ist.

Die Funktionsweise der Berstscheibe im Explosionsfall ist die Folgende:

Ein bei einer Explosion innerhalb eines anlagenseitigen Hohlraums, der von der Wand 20 umgeben ist, entstehender Überdruck führt dazu, dass sich der Zentralbereich 3 im Bereich der Sollbruchlinie 5 vom Flanschbereich 2 löst. Es kann ein Angelbereich 6 vorgesehen sein, um den der gelöste Zentralbereich 3 aufschwenken kann. Dabei wird die dortige flanschseitige Wärmeisolierung 15 zusammengedrückt. Die von einem Abdeckblech ausgebildete Abdeckung 12 verformt sich dort.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, nämlich:

Eine Berstscheibe, die gekennzeichnet ist durch eine flanschseitige Wärmeisolierung 15, die nach der Befestigung des Flanschbereichs 2 am Rand der Öffnung 21 in einer die Nische 16 ausfüllenden Weise an den Flanschbereich 2 anbringbar ist, und eine an der Berstscheibe 1 befestigbare Abdeckung 12, die im befestigten Zustand derart über den Flanschbereich 2 ragt, dass die in der Nische 16 angeordnete Wärmeisolierung in einer vom Flanschbereich 2 wegweisenden Richtung abgedeckt ist.

Eine Berstscheibe, die dadurch gekennzeichnet ist, dass die berstscheibenseitige Wärmeisolierung 4 von einer Kassette gebildet ist, die eine metallische Wand 7 ausbildet, die fest mit dem Zentralbereich 3 oder im Bereich einer Angel 6 mit dem Flanschbereich 2 verbunden ist.

Eine Berstscheibe, die dadurch gekennzeichnet ist, dass die Abdeckung 12 mittels Befestigungsmitteln an der berstscheibenseitigen Wärmeisolierung 4 befestigt ist.

Eine Berstscheibe, die dadurch gekennzeichnet ist, dass die Befestigungsmittel Einziehmuttern 8 aufweisen, die der metallischen Wand 7 der Kassette zugeordnet sind.

Eine Berstscheibe, die dadurch gekennzeichnet ist, dass der Rand der Abdeckung 12 einen in Richtung auf den Flanschbereich 2 weisenden, umlaufenden Kragen 14 ausbildet zum Übergreifen eines Steges 24 eines anlagenseitigen Rahmenblechs 23.

Eine Berstscheibe, die dadurch gekennzeichnet ist, dass die Abdeckung 12 von einem Blech ausgebildet ist, welches sich über die gesamte Grundrissfläche der Berstscheibe 1 erstreckt.

Eine Berstscheibe, die dadurch gekennzeichnet ist, dass die flanschseitige Wärmeisolierung 15 von einer lose in die Nische 16 eingebrachten Isolierwolle ausgebildet ist.

Eine Berstscheibenanordnung, die dadurch gekennzeichnet ist, dass die Berstscheibe 1 Bestandteil einer Wand einer lufttechnischen Anlage ist und mit Befestigungsmitteln, insbesondere durch Befestigungsöffnungen 11 hindurchgreifenden Befestigungsschrauben mit dem Rand der Öffnung 21 der Wand 20 der lufttechnischen Anlage verbunden ist, welche Wand 20 mit einer anlagenseitigen Wärmeisolierung 22 versehen ist, die sich bis angrenzend an den Flanschbereich 2 erstreckt.

Eine Berstscheibenanordnung, die dadurch gekennzeichnet ist, dass sich die anlagenseitige Wärmeisolierung 22 bis an ein den Flanschbereich 2 umgebendes Rahmenblech 23 erstreckt, dessen Überstand 24 von dem Kragen 14 der Abdeckung 12 überfangen wird.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

### Liste der Bezugszeichen

- 1: Berstscheibe, -platte
- 2: Flanschbereich
- 3: Zentralbereich
- 4: Wärmeisolierung
- 5: Sollbruchlinie
- 6: Angel
- 7: Wand, Abdeckung
- 8: Einziehmutter
- 9: Befestigungsrand
- 10: Abdeckrand
- 11: Befestigungsöffnung
- 12: Abdeckung, Abdeckbereich
- 13: Zentralbereich
- 14: Abkantung, Kragen
- 15: Wärmeisolierung
- 16: Nische
- 17: Befestigungsschraube
- 18: Dämmmasse
- 19: Randbereich
- 20: Wand
- 21: Öffnung
- 22: Wärmeisolierung, Anlage
- 23: Rahmenblech
- 24: Überstand, Steg
- 25: Abdeckung
- 26: Dämmmasse

## Patentansprüche

1. Berstscheibe (1) mit einem Flanschbereich (2) zum Befestigen an einem Rand einer Öffnung (21) einer Wand (20) einer lufttechnischen Anlage, wobei ein an den Flanschbereich (2) der Berstscheibe (1) entlang einer Sollbruchlinie (5) angrenzender Zentralbereich (3) der Berstscheibe (1) mit einer berstscheibenseitigen Wärmeisolierung (4) versehen ist, die sich zumindest nicht über Befestigungselemente (11) des Flanschbereichs (2) erstreckt, so dass sich eine vom Flanschbereich (2) und der berstscheibenseitigen Wärmeisolierung begrenzte Nische (16) ausbildet, **gekennzeichnet durch** eine flanschseitige Wärmeisolierung (15), die nach der Befestigung des Flanschbereichs (2) am Rand der Öffnung (21) in einer die Nische (16) ausfüllenden Weise an den Flanschbereich (2) angebracht ist, und eine an der Berstscheibe (1) befestigbare Abdeckung (12), die im befestigten Zustand derart über den Flanschbereich (2) ragt, dass die in der Nische (16) angeordnete Wärmeisolierung in einer vom Flanschbereich (2) wegweisenden Richtung abgedeckt ist.

2. Berstscheibe nach Anspruch 1, **dadurch gekennzeichnet, dass** die berstscheibenseitige Wärmeisolierung (4) von einer Kassette gebildet ist, die eine metallische Wand (7) ausbildet, die fest mit dem Zentralbereich (3) oder im Bereich einer Angel (6) mit dem Flanschbereich (2) verbunden ist.

3. Berstscheibe nach einem der vorhergehenden Ansprüche, **dadurch gekennzeichnet, dass** die Abdeckung (12) mittels Befestigungsmitteln an der berstscheibenseitigen Wärmeisolierung (4) befestigt ist.

4. Berstscheibe nach Anspruch 3, **dadurch gekennzeichnet, dass** die Befestigungsmittel Einziehmuttern (8) aufweisen, die der metallischen Wand (7) der Kassette zugeordnet sind.

5. Berstscheibe nach einem der vorhergehenden Ansprüche, **dadurch gekennzeichnet, dass** der Rand der Abdeckung (12) einen in Richtung auf den Flanschbereich (2) weisenden, umlaufenden Kragen (14) ausbildet zum Übergreifen eines Steges (24) eines anlagenseitigen Rahmenblechs (23).

6. Berstscheibe nach einem der vorhergehenden Ansprüche, **dadurch gekennzeichnet, dass** die Abdeckung (12) von einem Blech ausgebildet ist, welches sich über die gesamte Grundrissfläche der Berstscheibe (1) erstreckt.

7. Berstscheibe nach einem der vorhergehenden Ansprüche, **dadurch gekennzeichnet, dass** die flanschseitige Wärmeisolierung (15) von einer lose in die Nische (16) eingebrachten Isolierwolle ausgebildet ist.

8. Berstscheibenanordnung, mit einer Berstscheibe (1) nach einem der vorhergehenden Ansprüche, **dadurch gekennzeichnet, dass** die Berstscheibe (1) Bestandteil einer Wand einer lufttechnischen Anlage ist und mit Befestigungsmitteln, insbesondere durch Befestigungsöffnungen (11) hindurchgreifenden Befestigungsschrauben, mit dem Rand der Öffnung (21) der Wand (20) der lufttechnischen Anlage verbunden ist, welche Wand (20) mit einer anlagenseitigen Wärmeisolierung (22) versehen ist, die sich bis angrenzend an den Flanschbereich (2) erstreckt.

9. Berstscheibenanordnung nach Anspruch 8, **dadurch gekennzeichnet, dass** sich die anlagenseitige Wärmeisolierung (22) bis an ein den Flanschbereich (2) umgebendes Rahmenblech (23) erstreckt, dessen Überstand (24) von dem Kragen (14) der Abdeckung (12) überfangen wird.

10. Berstscheibe oder Berstscheibenanordnung, **gekennzeichnet durch** eines oder mehrere der kennzeichnenden Merkmale eines der vorhergehenden Ansprüche.

11. Verfahren zur Montage einer Berstscheibe (1) gemäß einem der Ansprüche 1 bis 7 an einem Rand einer Öffnung (21) einer Wand (20) einer lufttechnischen Anlage, wobei das Verfahren durch die folgenden Schritte gekennzeichnet ist:
- Befestigen des Flanschbereichs (2) der Berstscheibe (1) am Rand der Öffnung (21), wobei die berstscheibenseitige Wärmeisolierung (4) sich zumindest nicht über Befestigungselemente (11) des Flanschbereichs (2) erstreckt, so dass sich eine vom Flanschbereich (2) und der berstscheibenseitigen Wärmeisolierung begrenzte Nische (16) ausbildet,
- nach der Befestigung des Flanschbereichs (2) Anbringen einer flanschseitigen Wärmeisolierung (15) am Rand der Öffnung (21) an den Flanschbereich (2) in einer die Nische (16) ausfüllenden Weise,
- Überdecken der Nische durch den Rand einer an der Berstscheibe (1) befestigbaren Abdeckung (12), die im befestigten Zustand derart über den Flanschbereich (2) ragt, dass die in der Nische (16) angeordnete Wärmeisolierung in einer vom Flanschbereich (2) wegweisenden Richtung abgedeckt ist.

## Claims

1. A bursting disc (1) with a flange area (2) for attachment to an edge of an opening (21) in a wall (20) of a ventilation system, wherein a central area (3) of the bursting disc (1), bordered on the flange area (2) by a predetermined breaking line (5), is equipped with thermal insulation (4) on the bursting disc side which stretches at least not over the fastening elements (11) of the flange area (2) so that a niche (16) is formed bordered by the flange area (2) and the thermal insulation on the bursting disc side, **characterised by** a flange side thermal insulation (15) which, after attachment of the flange area (2) to the edge of the opening (21), is applied to the flange area (2) in such a manner as to fill the niche (16), and a cover (12) which can be attached to the bursting disc (1) which, in its attached state, protrudes over the flange area (2) such that the thermal insulation located in the niche (16) is covered in an orientation pointing away from the flange area (2).

2. The bursting disc according to claim 1, **characterised in that** the thermal insulation on the bursting disc side (4) is formed of a cartridge which is formed by a metallic wall (7) which is firmly attached to the flange area (2) by the central area (3) or in the area of a hinge (6).

3. The bursting disc according to any of the preceding claims, **characterised in that** the cover (12) is attached to the thermal insulation on the bursting disc side (4) by means of fastening elements.

4. The bursting disc according to claim 3, **characterised in that** the fastening elements have locking nuts (8) which are assigned to the metallic wall (7) of the cartridge.

5. The bursting disc according to any of the preceding claims, **characterised in that** the edge of the cover (12) forms a circumferential collar (14) pointing in the direction of the flange area (2) which overlaps a bar (24) of a sheet metal frame on the system side (23).

6. The bursting disc according to any of the preceding claims, **characterised in that** the cover (12) is formed of a sheet which extends over the entire plan surface of the bursting disc (1).

7. The bursting disc according to any of the preceding claims, **characterised in that** the thermal insulation on the flange side (15) is formed of loose insulation wool inserted into the niche (16).

8. A bursting disc arrangement with a bursting disc (1) according to any of the preceding claims, **characterised in that** the bursting disc (1) is part of a wall of a ventilation system and is connected to the edge of the opening (21) in the wall (20) of the ventilation system using fastening elements, in particular using mounting screws which reach through mounting openings (11), which wall (20) is equipped with thermal insulation on the system side (22) which extends to bordering on the flange area (2).

9. The bursting disc arrangement according to claim 8, **characterised in that** the thermal insulation on the system side (22) reaches to a sheet metal frame (23) which surrounds the flange area (2), the overhang (24) of which is overlapped by the collar (14) of the cover (12).

10. A bursting disc or bursting disc arrangement **characterised by** one or more of the distinguishing characteristics of any of the preceding claims.

11. Method for assembling a bursting disc according to any of the claims 1 to 7 to an edge of an opening (21) in a wall (20) of a ventilation system, wherein the method is **characterised by** the following steps:
- fastening the flange area (2) of the bursting disc (1) to the edge of the opening (21), wherein the thermal isolation (4) on the bursting disc side stretches at least not over the fastening elements (11) of the flange area (2) so that a niche (16) is formed bordered by the flange area (2) and the thermal insulation on the bursting disc side,
- after attachment of the flange area (2) installing a flange side thermal insulation (15) to the flange area (2) at the edge of the opening (21) in such a manner as to fill the niche (16),
- covering the niche with the edge of a cover (12) that can be attached to the bursting disc (1), the cover, in its attached state, protruding over the flange area (2) such that the thermal insulation located in the niche (16) is covered in a direction pointing away from the flange area (2).

## Revendications

1. Disque de rupture (1) doté d'une partie bride (2) pour la fixation au bord d'une ouverture (21) d'une paroi (20) d'une installation pneumatique, une partie centrale (3) du disque de rupture (1) adjacente à la partie bride (2) du disque de rupture (1) le long d'une ligne de rupture théorique (5) étant dotée d'une isolation thermique (4) du côté du disque de rupture, laquelle s'arrête au moins avant des éléments de fixation (11) de la partie bride (2), de manière à former une niche (16) délimitée par la partie bride (2) et l'isolation thermique côté disque de rupture, **caractérisé par** une isolation thermique côté bride (15) qui est montée, après la fixation de la partie bride (2), au bord de l'ouverture (21) dans la partie bride (2) de manière à remplir la niche (16), et par un revêtement (12) pouvant être fixé au disque de rupture (1), qui dépasse de la partie bride (2) lorsqu'il est fixé, de manière à ce que l'isolation thermique placée dans la niche (16) est recouverte dans une direction partant de la partie bride (2).

2. Disque de rupture selon la revendication 1, **caractérisé en ce que** l'isolation thermique côté disque de rupture (4) est constituée par une cassette, qui forme une paroi métallique (7), qui est reliée fixement à la partie centrale (3) ou à la partie bride (2) au niveau d'un gond (6).

3. Disque de rupture selon l'une des revendications précédentes, **caractérisé en ce que** le revêtement (12) est fixé à l'aide de moyens de fixation sur l'isolation thermique côté disque de rupture (4).

4. Disque de rupture selon la revendication 3, **caractérisé en ce que** les moyens de fixation comportent des écrous à rivet (8), qui sont affectés à la paroi métallique (7) de la cassette.

5. Disque de rupture selon l'une des revendications précédentes, **caractérisé en ce que** le bord du revêtement (12) forme une collerette périphérique (14) dans une direction allant vers la partie bride (2), pour le dépassement d'un rebord (24) d'une plaque de cadre côté installation (23).

6. Disque de rupture selon l'une des revendications précédentes, **caractérisé en ce que** le revêtement (12) est constitué d'une plaque métallique qui s'étend sur l'ensemble de la surface de base du disque de rupture (1).

7. Disque de rupture selon l'une des revendications précédentes, **caractérisé en ce que** l'isolation thermique côté bride (15) est constituée par une laine isolante introduite en vrac dans la niche (16).

8. Ensemble disque de rupture, comportant un disque de rupture (1) selon l'une des revendications précédentes, **caractérisé en ce que** le disque de rupture (1) est un élément constitutif d'une paroi d'une installation pneumatique, et est relié au bord de l'ouverture (21) de la paroi (20) de l'installation pneumatique par des moyens de fixation, en particulier par des vis de fixation traversant des ouvertures de fixation (11), lequel bord (20) est doté d'une isolation thermique côté installation (22), qui s'étend jusqu'à la limite de la partie bride (2).

9. Ensemble disque de rupture selon la revendication 8, **caractérisé en ce que** l'isolation thermique côté installation (22) s'étend jusqu'à une plaque de cadre (23) entourant la partie bride (2) et dont la partie saillante (24) est doublée par la collerette (14) du revêtement (12).

10. Disque de rupture ou ensemble disque de rupture, **caractérisé par** une ou plusieurs des caractéristiques de l'une des revendications précédentes.

11. Procédé de montage d'un disque de rupture (1) selon l'une des revendications 1 à 7 sur un bord d'une ouverture (21) d'une paroi (20) d'une installation pneumatique, le procédé étant **caractérisé par** les étapes suivantes :
- fixation de la partie bride (2) du disque de rupture (1) sur le bord de l'ouverture (21), l'isolation thermique côté disque de rupture (4) s'arrêtant au moins avant des éléments de fixation (11) de la partie bride (2), de manière à former une niche (16) délimitée par la partie bride (2) et l'isolation thermique côté disque de rupture,
- après la fixation de la partie centrale (2), le montage d'une isolation thermique côté bride (15) au bord de l'ouverture (21) dans la partie bride (2) de manière à remplir la niche (16),
- le recouvrement de la niche avec le bord d'un revêtement (12) pouvant être fixé au disque de rupture (1) et qui dépasse de la partie bride (2) lorsqu'il est fixé, de manière à ce que l'isolation thermique placée dans la niche (16) est recouverte dans une direction partant de la partie bride (2).
